# EUROPÄISCHE PATENTSCHRIFT

(11) **EP 0 995 668 B1**
(45) Veröffentlichungstag und Bekanntmachung des Hinweises auf die Patenterteilung: **07.01.2004**
(21) Anmeldenummer: 99119917.5
(22) Anmeldetag: 08.10.1999
(51) Int. Cl.: B62D 29/00

(54) **Hohlkammer-Leichtbauteil**
Light weight hollow chamber constructional element
Elément de construction allégé à chambre creuse

(30) Priorität: 21.10.1998 DE 19848516
(43) Veröffentlichungstag der Anmeldung: 26.04.2000
(73) Patentinhaber: BAYER AG, 51368 Leverkusen (DE)
(72) Erfinder: Wagenblast, Joachim, Dr., 50676 Köln (DE); Koch, Boris, Dipl.-Ing., 42929 Wermelskirchen (DE); Goldbach, Hubert, Dipl.-Ing., 40882 Ratingen (DE)

(56) Entgegenhaltungen:
- EP-A- 0 370 342
- US-A- 3 462 330

## Beschreibung

Die Erfindung betrifft ein Hohlkammer-Leichtbauteil, geeignet für die Übertragung von hohen mechanischen Belastungen, bestehend aus wenigstens einem schalenförmigen Gehäuseteil aus Metall, einer gerippten Stützstruktur aus Kunststoff und einer Deckplatte oder -schale, die den aus Gehäuseteil und Stützstruktur gebildeten Raum weitgehend abgedeckt und mit dem Gehäuseteil verbunden ist, sowie ein Verfahren zur Herstellung des Leichtbauteils.

Bei dem Leichtbauteil handelt es sich um ein Hohlkammer-Hybridteil bestehend aus einer Außenhaut aus einem hochfesten, z.B. duktilen Werkstoff, z.B. Stahl, und einer den Hohlraum des Gehäuseteiles wenigstens teilweise ausfüllenden Rippenstruktur aus einem leicht formbaren, die Außenhaut stützenden Material, z.B. aus thermoplastischem Kunststoff, wie z.B. aus der gattungsgemässen EP-A-0 370 342 bekannt ist.

Die in der Praxis genutzten hochbelastbaren Leichtbauteile bestehen entweder aus geschlossenen (z.B. Kastenprofil mit quadratischem, rechteckigem oder kreisrundem Querschnitt) oder offenen Profilen (z.B. I-, V-, L-, T- oder Doppel-T-Träger) oder Elementen aus verschweißten oder verklebten Metallblechen oder verstärkten Kunststoffplatten. Bekannt sind auch offene Metall-Kunststoff-Hybridprofile oder -Hybridteile (EP 0370342 A3) bestehend aus einer hochfesten schalenförmigen Außenhaut, die mit einer die Schale stützenden Rippenstruktur versehen ist.

Offene Profile oder Bauteile weisen im Vergleich zu Hohlkammerprofilen oder -bauteilen eine generell geringere Steifigkeit und Festigkeit auf. Leichtbauteile ohne stützende Rippenstruktur haben im Vergleich zu solchen mit stützender Rippenstruktur den Nachteil, daß sie bei entsprechender Beanspruchung durch Knicken versagen. Dies geschieht bei einer Belastung, die deutlich unter den Festigkeitseigenschaften des Werkstoffs liegt. Vergleicht man offene Hybridprofile oder -teile mit stützender Rippenstruktur mit bekannten Hohlkammer-Leichtbauteilen ohne stützende Rippenstruktur, so weisen offene Hybridprofile trotz Rippenstruktur eine insgesamt deutlich geringere Steifigkeit und Festigkeit auf.

Der Erfindung liegt daher die Aufgabe zugrunde, ein Bauteil der eingangs erwähnten Art zu schaffen, das sowohl die hohe Steifigkeit und Festigkeit von bekannten Hohlkammerprofilen bzw. -teilen aus Metall hat, als auch eine erheblich geringere Neigung zum Versagen durch Knicken wie bei Hybridprofilen bzw. -teilen (entsprechend EP 370 342) aufweist. Außerdem soll die Energieaufnahmefähigkeit bei der Verformung des Bauteils insbesondere im Überlastbereich deutlich erhöht werden.

Diese Aufgabe wird erfindungsgemäß durch die Merkmale des Anspruchs 1 gelöst.

Gegenstand der Erfindung ist ein hoch mechanisch beanspruchbares Hohlkammer-Leichtbauteil bestehend mindestens aus wenigstens einem schalenförmigen Gehäuseteil aus Metall, und einer Stützstruktur aus Kunststoff, insbesondere aus thermoplastischem Kunststoff, wobei die Stützstruktur auf der Innenseite des Gehäuseteiles anliegt und insbesondere mit dem Gehäuseteil verbunden ist, und wenigstens einer Deckplatte oder Deckschale aus Metall oder Kunststoff-Composites, die den aus Gehäuseteil und Stützstruktur gebildeten Hohlraum weitgehend abdeckt und in ihrem Randbereich wenigstens mit einem Teil der Umrandung des Gehäuseteiles verbunden ist.

Die Stückstruktur kann auch an dem Deckblech oder der Deckschale anliegen.

Die Außenhaut des Bauteils besteht aus mindestens zwei Teilen (Gehäuseteil und Deckblech), die aus einem hochfesten Werkstoff (z.B. Stahl, Aluminium, Magnesium, oder Kunststoff-Composites) gefertigt sind.

Denkbar ist auch ein Rohr, in das eine Stückstruktur eingeschoben ist und dessen Enden gegebenenfalls verschlossen sind. In diesem Fall sind Gehäuseteil und Deckschale einstückig ausgebildet.

Die Stützstruktur ist eine gerippte Stützstruktur und wird vorzugsweise aus einem gegebenenfalls faserverstärkten thermoplastischen Material (z.B. PA, PBT, PP, ABS, PC, sowie Mischungen dieser Materialien in verstärkter (z.B. mit Glasfasern) und unverstärkter Ausführung) gefertigt.

Unter gerippter Stützstruktur wird ein räumliches Gebilde verstanden, das die Wandungen des Leichtbauteiles von innen abstützt und Kräfte, die auf das Bauteil wirken, gleichmäßig verteilt. Die Stützstruktur kann parallele, im Winkel zueinander stehende oder einander kreuzende Rippen aufweisen.

Bevorzugt ist ein Leichtbauteil, bei dem die Stützstruktur mit dem Gehäuseteil formschlüssig, insbesondere mittels Spritzguß, verbunden ist.

Besonders bevorzugt ist die Stützstruktur mit dem Gehäuseteil durch Zapfen, die an die Stützstruktur angeformt sind und zu Kunststoffnieten umgeformt sind, formschlüssig verbunden.

Eine Variante des Leichtbauteiles ist dadurch gekennzeichnet, daß die Deckplatte oder die Deckschale ebenfalls mit einer Stützstruktur aus Kunststoff versehen ist.

Die Deckplatte oder Deckschale kann auf ihrer Außenseite, insbesondere im Bereich ihrer Verbindung zum Gehäuseteil, teilweise oder vollständig mit thermoplastischem Kunststoff überspritzt bzw. ummantelt sein.

Vorteilhafterweise ist das Leichtbauteil so ausgeführt, daß die Deckplatte oder Deckschale mit dem Gehäuseteil an unmittelbar aufeinander liegenden Stellen, insbesondere im Bereich von übereinanderliegenden Durchbrüchen in Deckschale und Gehäuseteil mittels thermoplastischem Kunststoff formschlüssig miteinander verbunden ist.

In einer bevorzugten Variante des Leichtbauteiles ist die Deckschale bzw. die Deckplatte mit der Stützstruktur und/oder dem Gehäuseteil verschweißt bzw. mittels Kunststoffnieten, die z.B. per Ultraschallschweißen angebracht werden (auch Zapfenschweißen genannt), verbunden, wobei auf Rippen der Stützstruktur vorgesehene Kunststoffzapfen formschlüssig in Hinterschnitte des Gehäuseteiles bzw. der Deckschale oder der Deckplatte eingreifen.

Die Deckschale bzw. die Deckplatte kann mit der Stützstruktur und/oder dem Gehäuseteil durch Schweißen übereinander liegender Flächen, insbesondere durch Reibschweißen zur Erzeugung z.B. einer Kunststoff-Kunststoff- oder Kunststoff-Werkstoff Verbindung, durch Verschweißen übereinander liegender Kanten, durch Punktschweißen, Kleben, Börteln, Clinchen, Nieten, Kunststoff-Nieten, Zapfenschweißen von Kunststoffzapfen oder einer beliebigen Kombination dieser Verfahren verbunden sein.

Die Stützstruktur ist mit der Wand des Gehäuseteiles vorzugsweise mittels spritzgegossenen formschlüssigen Verbindungen im Bereich von Durchbrüchen und/oder Sicken in der Wand des Gehäuseteiles verbunden.

Die Stützstruktur kann auch mit dem Gehäuseteil mittels Steckverbindungen oder Schnappverbindungen formschlüssig verbunden sein.

Alternativ oder zusätzlich kann die Stützstruktur mit dem Gehäuseteil durch Klebund/oder Schweißverbindungen stoffschlüssig verbunden sein.

Das Gehäuseteil, die Deckplatte oder die Deckschale bestehen unabhängig voneinander insbesondere aus Metallblech, bevorzugt aus Stahl- oder Aluminium-Blech, oder aus Druckgußteilen, bevorzugt aus Aluminium, Zink oder Magnesium oder aus faserverstärktem Kunststoff bzw. Kunststoff-Composites.

Der Kunststoff der Stützstruktur des Leichtbauteiles ist vorzugsweise ein, insbesondere verstärkter und/oder gefüllter, thermoplastischer Kunststoff, bevorzugt ein Polycarbonat (PC), Polyester, Polyurethan, Polystyrol, ABS, Polyamid (PA), Polybutylenterephthalat (PBT), oder Polypropylen (PP).

Das Leichtbauteil kann teilweise funktionelle Öffnungen in Gehäuseteil, Deckplatte oder Deckschale zu dem aus Gehäuseteil und Deckplatte oder Deckschale gebildeten Raum aufweisen.

Es ist alternativ möglich das Leichtbauteil so auszuführen, daß die Stützstruktur lediglich in das Gehäuseteil eingelegt ist. Die Stützstruktur wird dabei durch die Verbindung von Gehäuseteil und Deckplatte oder Deckschale fixiert.

Die Herstellung des Hohlkammer-Hybridbauteils kann auf unterschiedliche Weise erfolgen. Dabei unterscheiden sich überwiegend die Art der Anbindung der Rippenstruktur mit dem Gehäuseteil sowie die Verbindung der verschiedenen äußeren Teile:
1. Formschlüssige Anbindung der Rippenstruktur an das Gehäuseteil durch Materialumformung
   Bei diesem bevorzugten Herstellungsverfahren kann die Anbindung sowohl durch Spritzgießen als auch durch Kunststoffnieten mittels zuvor angeformter Verbindungselemente erreicht werden. In beiden Fällen wird das Gehäuseteil mit Durchbrüchen versehen (z.B. Metallblech mit Bohrungen), durch die ein formschlüssiger Verbund mit der Rippenstruktur erreicht wird.
   Bei der Anbindung durch Spritzgießen wird zunächst ein offenes Gehäuseteil in ein Spritzgießwerkzeug eingelegt. Durch den Spritzgießprozeß wird sowohl die Rippenstruktur geformt als auch die Anbindung an das Gehäuseteil erreicht. Da das Kunststoffmaterial in flüssiger Form in das Spritzgießwerkzeug gefüllt wird, kann es die Durchbrüche in dem Gehäuseteil durchströmen und auf der Rückseite der Durchbrüche einen Nietkopf bilden. Anschließend wird das Hohlkammer-Bauteil durch Anbringen (z.B. Verschweißen) mindestens eines weiteren äußeren Teils - hier als Deckplatte oder Deckschale bezeichnet - komplettiert.
   In ähnlicher Weise kann auch bei Anwendung des Kunststoffnietens (Zapfenschweißen) eine Anbindung der Rippenstruktur an das Gehäuseteil erzielt werden. Dabei wird zunächst die Rippenstruktur separat ohne Gehäuseteil, aber mit angeformten Verbindungszapfen, gespritzt. Anschließend werden die äußeren Teile (Gehäuseteil und Deckplatte) um die Rippenstruktur gelegt wobei die Verbindungszapfen durch die Durchbrüche der äußeren Teile ragen. Anschließend werden die Verbindungszapfen mit Hilfe eines Umformprozesses (z.B. durch Ultraschallschweißen) zu einem Nietkopf umgeformt. Bei dieser Vorgehensweise kann das Leichtbauteil durch diesen abschließenden Schweißvorgang komplettiert werden, indem die erforderlichen Außenteile in entsprechender Weise um die Rippenstruktur angeordnet werden.
2. Formschlüssige Verbindung der Rippenstruktur mit dem Gehäuseteil durch Einlegen, Stecken oder Schnappen.
   Bei diesem weiteren bevorzugten Verfahren wird ebenfalls zunächst eine separate Rippenstruktur hergestellt. Auch hier gibt es wieder mehrere Möglichkeiten. Einerseits kann die Rippenstruktur aus einem extrudierten Profil geformt sein, das einfach zwischen die Außenteile des Leichtbauteils (das Gehäuseteil und Deckplatte oder Deckschale) gelegt wird. Durch Verbinden der Außenteile erhält man dann den Formschluß. Auf der anderen Seite kann auch eine spritzgegossene Rippenstruktur mit angeformten Zapfen verwendet werden, die ebenfalls zwischen den Außenteilen des Leichtbauteils angeordnet wird, um dann durch Verbinden der Außenteile des Leichtbauteils einen Formschluß zwischen Rippenstruktur und Außenteil zu erzielen. Dabei werden die angeformten Zapfen der Rippenstruktur in Durchbrüche der Außenteile gesteckt, um eine verbesserte Anbindung der Rippenstruktur an die Außenhaut zu erreichen.
3. Verbindung der Außenteile des Leichtbauteils durch Materialumformung der Rippenstruktur.
   Ähnlich wie die Anbindung der Rippenstruktur an die Außenteile des Leichtbauteils können auch die Außenteile (Gehäuseteil und Deckplatte/Deckscha-1e) untereinander verbunden werden. Dabei können ebenfalls zuvor angeformte Verbindungszapfen der Rippenstruktur genutzt werden, um mit Hilfe eines Umformprozesses einen Formschluß zwischen Rippenstruktur und den verschiedenen Außenteilen und/oder direkt zwischen den Außenteilen zu realisieren. Soll die Verbindung mittels Spritzgießen erreicht werden, müssen die Außenteile unmittelbar übereinander liegen bzw. dürfen nur einen geringen Abstand voneinander haben. Dies läßt sich insbesondere im Randbereich von Profilen oder partiell an Sicken realisieren. Wird die Verbindung durch Umformen der Verbindungszapfen mittels Ultraschall durchgeführt, sind auch direkte Verbindungen von Rippen mit Außenteilen möglich.
4. Stoffschlüssiges oder formschlüssiges Verbinden der Außenteile des Leichtbauteiles.
   Ein direktes stoffschlüssiges oder formschlüssiges Verbinden der Außenteile (Gehäuseteil und Deckplatte/Deckschale) des Leichtbauteiles kann bei Verwendung von Metallblechen durch Punktschweißen, Clinchen (d.h. Verbinden zweier oder mehrerer übereinanderliegender Bleche durch partielles Verformen bestimmter Stellen der Bleche zu einer pilzförmigen Vertiefung, die eine formschlüssige Verbindung der Bleche ergibt) oder durch Kleben erreicht werden. Sofern die Außenteile aus Kunststoff-Composites hergestellt werden, kann partielles Schweißen oder ebenfalls Kleben zur Anwendung kommen.

Weitere Möglichkeiten zum Verbinden der Außenteile bestehen in der Anwendung unterschiedlicher Kombinationen der oben unter 1 bis 4 genannten Verfahren. Demnach besteht die Möglichkeit Formschlüsse zwischen den Außenteilen zu realisieren, indem deckungsgleiche Sicken in beiden Teilen angebracht werden, die über einen Durchbruch zusätzlich mit einer Nietverbindung, durch Umformen von an die Rippenstruktur angeformten Verbindungszapfen, versehen werden.

Weiterer Gegenstand der Erfindung ist ein Verfahren zur Herstellung von hoch mechanisch beanspruchbaren Leichtbauteilen als Kunststoff-Werkstoff-Verbund in Hybridbauweise, bestehend mindestens aus wenigstens einem schalenförmigen Gehäuseteil, wenigstens einer Deckplatte oder Deckschale und einer von diesen Teilen eingeschlossenen Stützstruktur, das dadurch gekennzeichnet ist, daß wenigstens ein schalenförmiges Gehäuseteil aus einem hochfesten Werkstoff oder Werkstoffverbund auf seiner Innenseite mit einer Stützstruktur aus Kunststoff versehen wird und anschließend mit einer Deckplatte oder Deckschale aus einem hochfesten Werkstoff oder Werkstoffverbund zu einem Hohlkammerleichtbauteil verbunden wird.

Vorzugsweise wird in einem ersten Schritt die Stützstruktur auf ein Gehäuseteil durch Spritzgießen aufgebracht, und die Rippen der Stützstruktur werden durch Umformen von Zapfen, die Bestandteil der Stützstruktur sind, in einem zweiten Schritt formschlüssig mit der Wand des zweiten Gehäuseteiles verbunden.

Ein bevorzugtes Verfahren ist dadurch gekennzeichnet, daß die Deckplatte oder die Deckschale vor dem Verschließen des Gehäuseteiles mit einer eigenen Stützstruktur aus Kunststoff versehen und/oder teilweise oder vollständig mit Kunststoff überspritzt bzw. ummantelt wird.

Die Deckplatte oder Deckschale können mit dem Gehäuseteil an unmittelbar aufeinander liegenden Stellen, insbesondere im Bereich von übereinander liegenden Durchbrüchen formschlüssig miteinander verbunden werden und mittels thermoplastischem Kunststoff gehalten werden.

Der Formschluß besteht dabei sowohl zwischen den Gehäuseteilen und zwischen Kunststoffniet und Gehäuseteilen.

Eine Variante des Verfahrens ist dadurch gekennzeichnet, daß die Deckschale bzw. die Deckplatte mit der Stützstruktur und/oder dem Gehäuseteil verschweißt bzw. mittels Kunststoffnieten verbunden werden, wobei auf Rippen der Stützstruktur vorgesehene Kunststoffzapfen formschlüssig in Hinterschnitte des Gehäuseteiles bzw. der Deckschale oder der Deckplatte eingreifen.

Bevorzugt werden die Deckschale bzw. die Deckplatte mit der Stützstruktur und/oder dem Gehäuseteil durch Schweißen übereinander liegender Flächen (insbesondere durch Reibschweißen zur Erzeugung einer Kunststoff-Kunststoff- oder Kunststoff-Werkstoff Verbindung), durch Verschweißen übereinander liegender Kanten, durch Punktschweißen, Kleben, Börteln, Clinchen, Nieten, Kunststoff-Nieten, Zapfenschweißen von Kunststoffzapfen oder einer beliebigen Kombination dieser Verfahren verbunden.

Unabhängig von den genannten Arten der Verbindung kann die Stützstruktur vor dem Verschliessen des Gehäuseteiles durch Stecken oder Schnappen mit dem Gehäuseteil formschlüssig verankert werden.

Es ist auch möglich die Stützstruktur vor dem Verschliessen des Gehäuseteiles durch Kleben und/oder Schweißen stoffschlüssig mit dem Gehäuseteil zu verbinden.

Die mit der Erfindung erzielten Vorteile können wie nachfolgend beschrieben werden: Verglichen werden hierbei Eigenschaften eines geschlossenen, kreuzverrippten Leichtbauteiles, bestehend aus einem U-Profil als Gehäuseteil, das eine Kunststoffrippenstruktur enthält und mit einem Deckblech durch Punktschweißen verbunden ist, mit einem offenen Kunststoff-Metall-Hybridträger mit vergleichbarer Rippenstruktur sowie einem Hohlkammerprofil aus Stahlblech mit jeweils gleichen Außenabmessungen. (Die Eigenschaftswerte sind auf Bauteile mit gleichem Gewicht bezogen):

Die max. Biegebelastung ist bei einem kreuzverrippten Leichtbauteil um 30 % gegenüber dem offenen Hybridträger sowie um 60 % gegenüber dem Hohlkammerprofil aus Stahlblech erhöht.

Die Torsionssteifigkeit ist beim kreuzverrippten Leichtbauteil um 100 % höher gegenüber dem offenen Hybridträger (gleiche Torsionssteifigkeit im Vergleich zum reinen Stahlblechprofil)

Die Energieaufnahmefähigkeit des kreuzverrippten Leichtbauteiles liegt um ca. 100 % höher sowohl im Vergleich zum offenen Hybridträger als auch zum Hohlkammerprofil aus Stahlblech.

Im Vergleich zum offenen Hybridprofil: ist mit dem Leichtbauteil eine beliebige Einbaulage möglich (z.B. bei Belastung eines offenen Hybrid-U-Profils auf der offenen Seite Ausknicken der Gurte, da Druckbeanspruchung derselben auftritt). Dadurch wird eine sehr hohe Biegesteifigkeit des Leichtbauteiles erreichbar.

Im Vergleich zu einem bekannten Profil aus Stahlblech weist das geschlossene Leichtbauteil eine günstigere Krafteinleitung auf, da hierbei das Stahlblech durch die interne Rippenstruktur gestützt wird.

Die geschilderten Vorteile wurden mittels erster mechanischer Tests ermittelt. Bei optimierter Gestaltung des geschlossenen Leichtbauteiles (z.B. durch Anordnung von Rippen der Rippenstruktur in Längs- und Querrichtung des profilförmigen Gehäuseteiles und formschlüssige Verbindung von U-Profil und Deckblech) können die Eigenschaftswerte noch deutlich verbessert werden.

Gegenstand der Erfindung ist auch die Verwendung des erfindungsgemäßen Leichtbauteils als Längsträger, Querträger, Bodengruppenbauteil, Querlenker, energieabsorbierende Seiten- oder Stirnwand oder als Stoßfängerträger im Fahrzeugbau oder Flugzeugbau.

Bevorzugt ist die Verwendung des erfindungsgemäßen Leichtbauteils als Knotenelement zur Verbindung von Trägem, insbesondere im Fahrzeugbau.

Die Erfindung wird nachstehend anhand der Figuren beispielhaft näher erläutert, ohne daß dadurch die Erfindung im Einzelnen eingeschränkt wird.

Es zeigen:
- Figur 1: den Querschnitt durch ein erfindungsgemäßes Leichtbauteil
- Figur 1a: die Teilansicht einer Aufsicht auf das Leichtbauteil nach Fig. 1
- Figur 2: die Teilansicht eines Leichtbauteiles ähnlich Fig. 1 mit Kunststoffnietverbindung
- Figur 3: die Teilansicht eines Leichtbauteiles ähnlich Fig. 1 mit Kunststoffnietverbindung und mit dem Deckteil 4 verbundener Stützstruktur 9
- Figur 4: die Teilansicht eines Leichtbauteiles ähnlich Fig. 1 mit einer Börtelverbindung von Profil 1 und Deckteil 4
- Figur 5: die Teilansicht eines Leichtbauteiles ähnlich Fig. 1 mit einer Clinchverbindung von Profil 1 und Deckteil 4
- Figur 6: die Teilansicht eines Leichtbauteiles ähnlich Fig. 1 mit einer Clinchverbindung von Profil 1 und Deckteil 4 und zusätzlicher Kunststoffumspritzung 19
- Figur 7: die Teilansicht eines Leichtbauteiles ähnlich Fig. 1 mit einer Clinchverbindung von Profil 1, Fügeteil 17 und Deckteil 4
- Figur 8: Aufsicht und Schnitt durch ein Leichtbauteil in Form eines Doppelhutprofiles
- Figur 9: T-Knotenverbindung zweier erfindungsgemäßer Leichtbauteile mit einem konventionellen Metallträger

### Beispiele

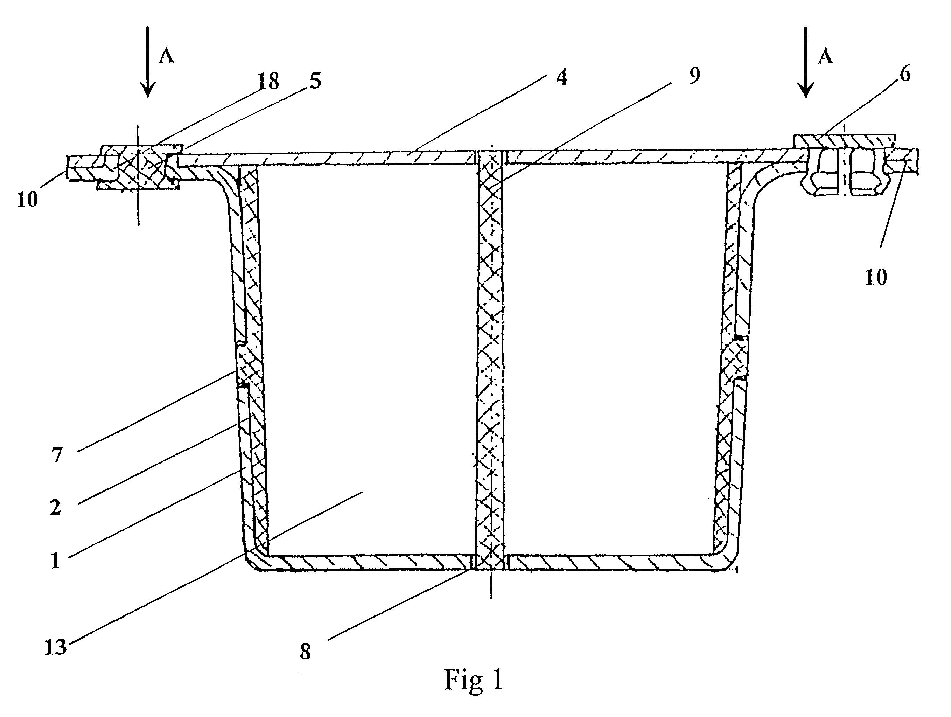

### Trägerelemente aus geschlossenen Hutprofilen mit innenliegender Rippenstruktur- Fig. 1 bis 7

Fig. 1 bis Fig. 7 zeigen Hutprofile bestehend aus einem U-Profil 1, das mit einem Deckblech 4 verschlossen wurde. Die innenliegende Rippenstruktur 2 wurde dabei zunächst mittels Spritzgießen in das offene U-Profil eingebracht. Anschließend erfolgte das Anbringen des Deckbleches 4 nach unterschiedlichen Methoden.

Fig. 1 zeigt ein Profil, das im Flanschbereich 10 zwischen U-Profil 1 und Deckblech 4 einerseits durch eine Kunststoffniet-Verbindung 5 und andererseits durch eine Schnappverbindung unter Verwendung eines zusätzlichen Schnappelementes 6 zusammengehalten wird. Die Kunststoffniet-Verbindung 5, die in diesem Ausführungsbeispiel durch einen Formschluß 18 zwischen U-Profil 1 und Deckblech 4 verstärkt wird, kann sowohl durch Spritzgießen als auch durch Ultraschallschweißen hergestellt werden. Die Rippenstruktur 2 selbst ist über angespritzte Verbindungselemente 7,8 formschlüssig an U-Profil 1 und Deckblech 4 befestigt. Die zusätzliche Verbindung von U-Profil 1 und Deckblech 4 mittels zentraler Streben 9 innerhalb der Rippenstruktur 2 erhöhen die Steifigkeit des Trägers.

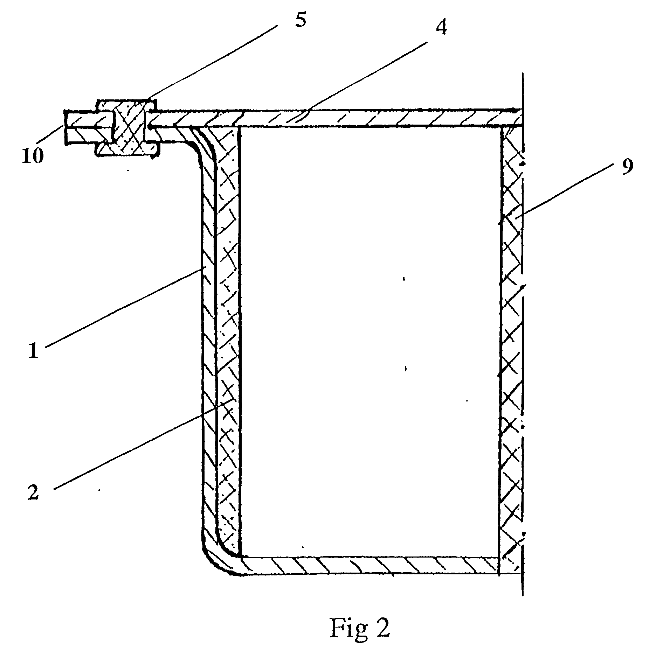

Fig. 2 beschreibt einen einfachen Träger, bei dem U-Profil 1 und Deckblech 4 lediglich im Flanschbereich 10 über einen Kunststoffniet 5 verbunden sind.

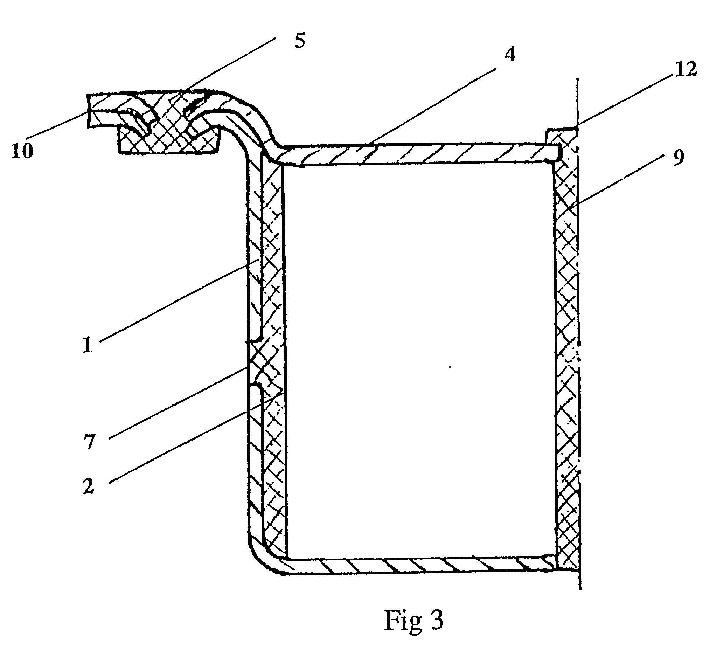

In Fig. 3 erfolgt die Verbindung von U-Profil 1 und Deckblech 4 mit Hilfe von Kunststoffnietverbindungen 12, 13 sowohl im Flanschbereich 10 als auch über die zentralen Streben 9 der Rippenstruktur 4. Die Nietverbindung 13 im Flanschbereich 10 kann sowohl durch Spritzgießen als auch durch Ultraschallschweißen hergestellt werden. Die Nietverbindung 12 im Bereich der zentralen Streben 9 der Rippenstruktur 4 kann lediglich durch Ultraschallschweißen erreicht werden.

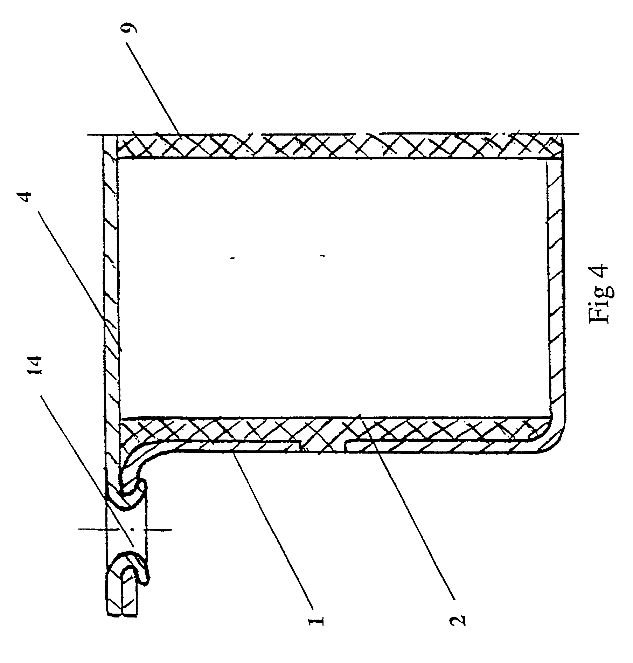

Die Verbindung von U-Profil 1 und Deckblech 4 wird in dem Leichtbauteil nach Fig. 4 mittels Börteln erreicht. Dabei werden die Bohrungen 14 im duktilen Deckblech 4 derart verformt, daß sich eine formschlüssige Verbindung des Deckbleches 4 mit dem U-Profil 1 ergibt.

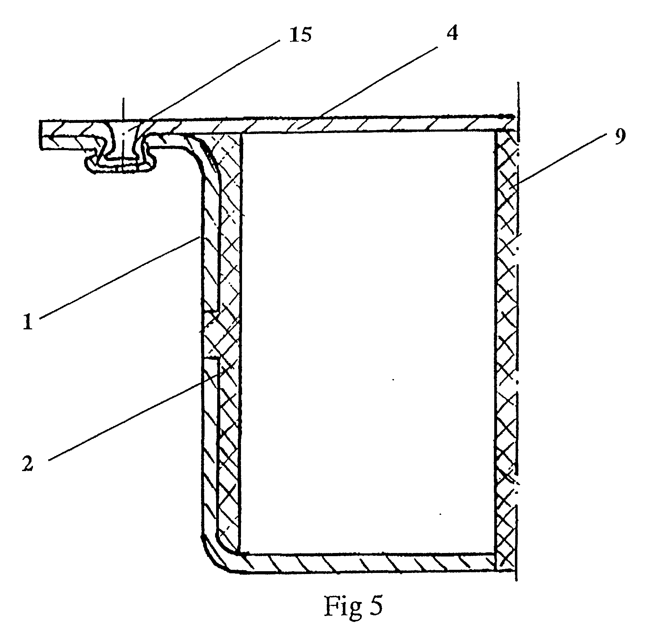

In der Variante des Leichtbauteiles nach Fig. 5 erzielt man mittels "Clinchen" ebenfalls eine formschlüssige Verbindung im Flanschbereich 10 zwischen U-Profil 1 und Deckblech 4. Dabei werden U-Profil 1 und Deckblech 4 an den Verbindungsstellen 15 gemeinsam mit Hilfe einer Kombination von Tiefziehen mit anschließendem Stauchen zu einem formschlüssigen Verbindungselement verformt.

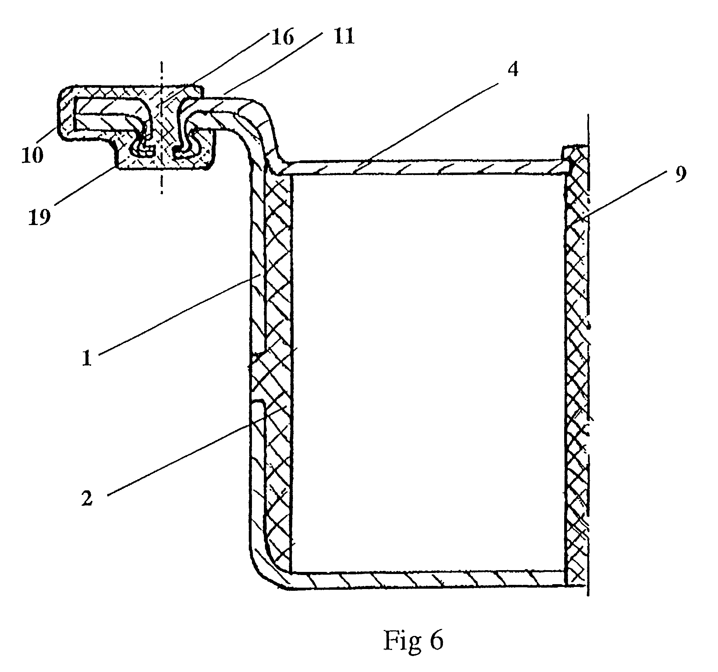

Das Ausführungsbeispiel nach Fig. 6 zeigt eine Teilansicht eines Leichtbauteiles mit Verbindungselementen im Flanschbereich 10 zwischen U-Profil 1 und Deckblech 4, die man in erster Linie durch geclinchte Bohrungen 16 erhält, die anschließend durch Überspritzung 19 mit Kunststoff noch zusätzlich gesichert werden.

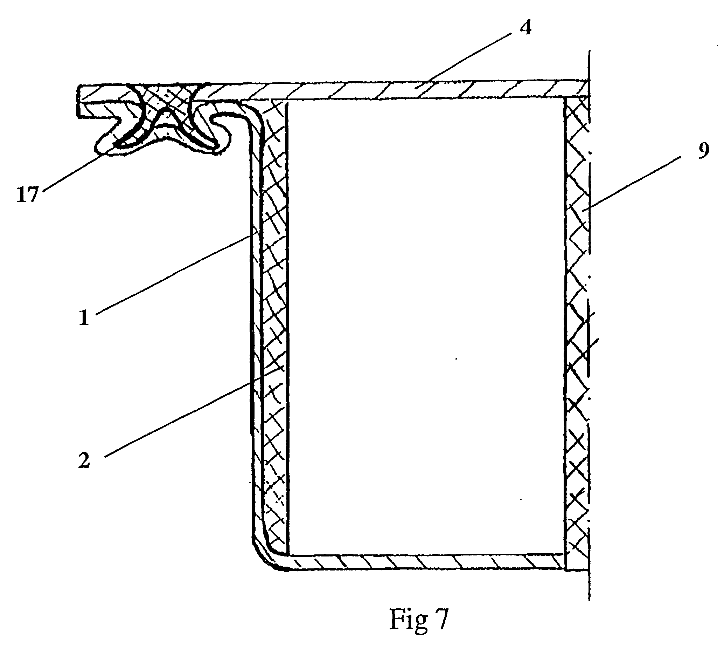

In dem Leichtbauteil nach Fig. 7 erreicht man die Verbindung zwischen U-Profil 1 und Deckblech 4 ebenfalls durch Clinchen. Bei diesem Ausführungsbeispiel wird jedoch noch ein zusätzliches verformbares Fügeteil 17 verwendet, das die Verbindung zwischen Deckblech 4 und Profil 1 sichert.

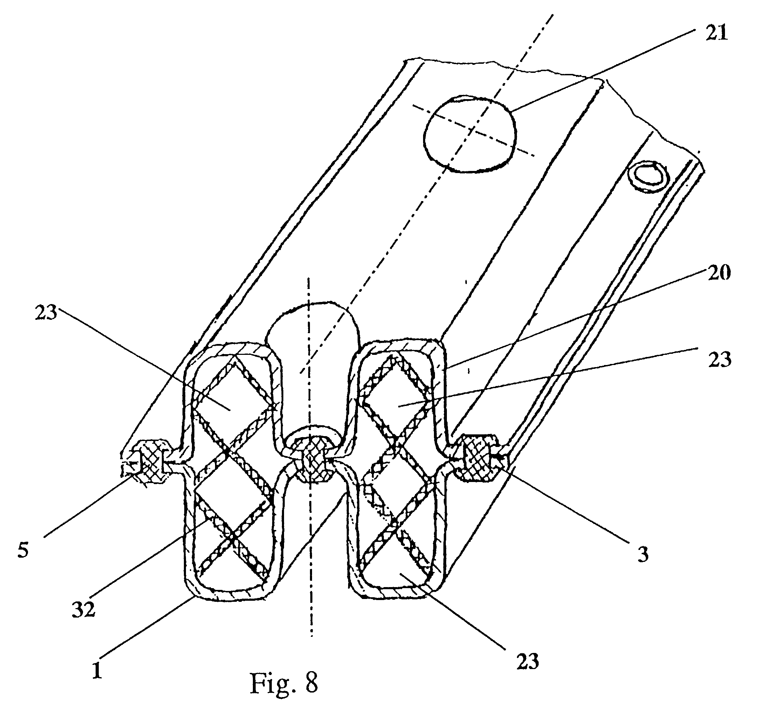

### Träger aus Doppelhutprofil mit innenliegender Rippenstruktur - Fig. 8

In Fig. 8 ist ein Doppelhutprofil dargestellt, das an mehreren Stellen auf der Längsachse der Profile 20 und 1 Verbindungsstellen 21 aufweist. Gehäuseteil 1 und Deckschale 20 sind hierbei gleichgestaltete Profilbleche, die an verschiedenen Anschlußflächen Kontakt haben. An den Verbindungsstellen 21 haben die Profilbleche 1, 20 übereinanderliegende Öffnungen 3. Die Verbindungsstellen 21 werden durch Kunststoffniete 5 an den Öffnungen 3 zusammengehalten, die sowohl durch Spritzgießen als auch durch Ultraschallschweißen geformt werden können. Die innenliegende Rippenstruktur 32 ist in diesem Fall durch Extrusion hergestellt. Sie wird lediglich in die Hohlräume 23 der U-Profile 1 und 20 eingelegt und durch die Verbindung derselben formschlüssig im Träger 20, 1 gehalten.

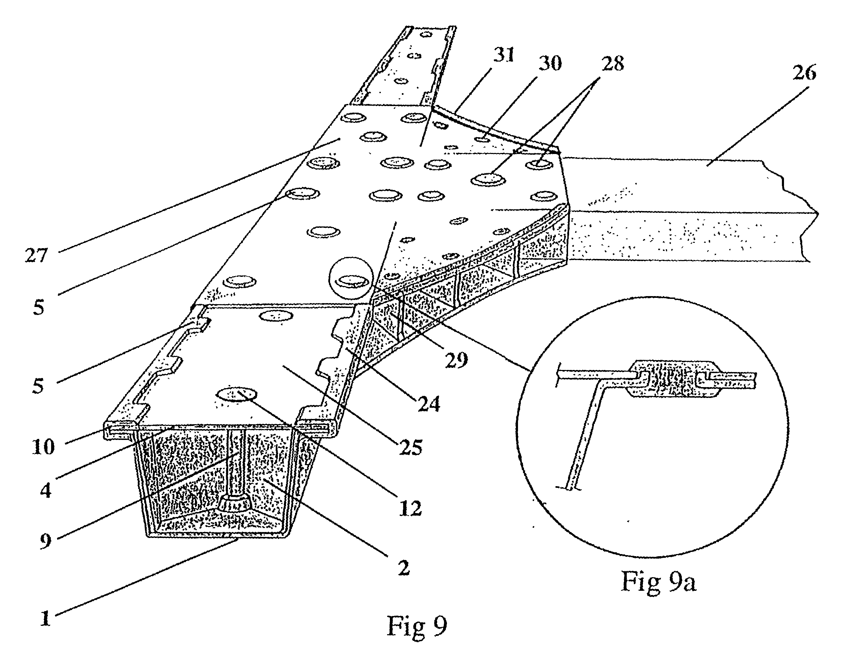

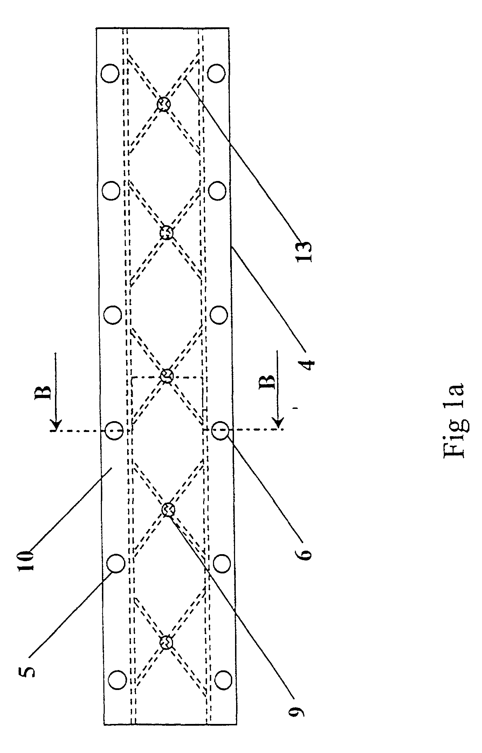

### Geschlossener Träger mit Knotenelement - Fig. 9

Fig. 9 zeigt die Verbindung zweier Träger in Form eines T-Knotens. Dabei wird eine geschlossener Kunststoff-Metall-Hybridträger 25 mit einem reinen Metallträger 26 verbunden. Der geschlossene Hybridträger 25 besteht aus einem U-Profilblech 1 und einen Deckblech 4 sowie aus einer innenliegenden Rippenstruktur 2. Die Verbindung von U-Profil 1 und Deckblech 4 erfolgt an mehreren Stellen. Einerseits wurden Verbindungselemente mit Hilfe der Kunststoffniete 5 bzw. 12 im Flanschbereich 10 und im Bereich der Streben 9 der Rippenstruktur 2 geschaffen (ähnlich der Ausführung in Fig. 1 und Fig. 3). Auf der anderen Seite wird durch die Kantenumspritzung 24 im Flanschbereich 10 die Festigkeit der Verbindung zwischen U-Profil 1 und Deckblech 4 noch weiter verstärkt (vergleichbar dem Querschnitt nach Fig. 6).

Die Verbindung der beiden Träger 25 und 26 erfolgt durch zwei Verbindungsbleche 27, die mittels Kunststoffniete 5 mit dem Hybridträger 25 und über die Kunststoffniete 28 mit dem reinen Metallträger 26 verbunden werden. Die mittels Kunststoffniete 30 und Kantenumspritzung 31 zwischen den Verbindungsblechen 27 angebrachten weiteren Rippenstrukturen 29 verhindern ein vorzeitiges Ausbeulen der Verbindungsbleche 27, wodurch eine Verstärkung des gesamten T-Knotens erreicht wird. Damit die Rippenstrukturen 29 in jedem Fall auf Druck beansprucht werden, sind die Verbindungsbleche 27 im Bereich der Rippenstrukturen 29 nach innen bombiert.

## Patentansprüche

1. Hohlkammer-Leichtbauteil bestehend mindestens aus wenigstens einem schalenförmigen Gehäuseteil (1) aus Metall und einer gerippten Stützstruktur (2) aus Kunststoff, insbesondere aus thermoplastischem Kunststoff, wobei die Stützstruktur (2) auf der Innenseite des Gehäuseteiles (1) anliegt und insbesondere mit dem Gehäuseteil (1) verbunden ist, **gekennzeichnet durch** wenigstens eine Deckplatte (4) oder Deckschale (20) aus Metall oder Kunststoff-Composites, die den aus Gehäuseteil (1) und Stützstruktur (2) gebildeten Raum weitgehend abdeckt und in ihrem Randbereich wenigstens mit einem Teil der Umrandung (10) des Gehäuseteiles (1) verbunden ist.

2. Leichtbauteil nach Anspruch 1, **dadurch gekennzeichnet, daß** die Stützstruktur (2) mit dem Gehäuseteil (1) formschlüssig, insbesondere mittels Spritzguß, verbunden ist.

3. Leichtbauteil nach Anspruch 1 oder 2, **dadurch gekennzeichnet, daß** die Stützstruktur (2) mit dem Gehäuseteil (1) durch Zapfen, die an die Stützstruktur (2) angeformt sind und zu Kunststoffnieten umgeformt sind, formschlüssig verbunden ist.

4. Leichtbauteil nach einem der Ansprüche 1 bis 3, **dadurch gekennzeichnet, daß** die Deckplatte (4) oder die Deckschale (20) ebenfalls mit einer Stützstruktur (32) aus Kunststoff versehen ist.

5. Leichtbauteil nach einem der Ansprüche 1 bis 4, **dadurch gekennzeichnet, daß** die Deckplatte (4) oder Deckschale (20) auf ihrer Außenseite (11), insbesondere im Bereich ihrer Verbindung zum Gehäuseteil (1), eine teilweise oder vollständige Ummantelung oder Überspritzung (19, 24) mit thermoplastischem Kunststoff aufweist.

6. Leichtbauteil nach einem der Ansprüche 1 bis 5, **dadurch gekennzeichnet, daß** die Deckplatte (4) oder Deckschale (20) mit dem Gehäuseteil (1) an unmittelbar aufeinander liegenden Stellen, insbesondere im Bereich von übereinander liegenden Durchbrüchen (3) mittels thermoplastischem Kunststoff formschlüssig miteinander verbunden ist.

7. Leichtbauteil nach einem der Ansprüche 1 bis 6, **dadurch gekennzeichnet, daß** die Deckschale (20) bzw. die Deckplatte (4) mit der Stützstruktur (2) und/oder dem Gehäuseteil (1) verschweißt bzw. mittels Kunststoffnieten verbunden ist, wobei auf Rippen (9) der Stützstruktur (2) vorgesehene Kunststoffzapfen (8) formschlüssig in Hinterschnitte des Gehäuseteiles (1) bzw. der Deckschale (20) oder der Deckplatte (4) eingreifen.

8. Leichtbauteil nach einem der Ansprüche 1 bis 7, **dadurch gekennzeichnet, daß** die Deckschale (20) bzw. die Deckplatte (4) mit der Stützstruktur (2) und/oder dem Gehäuseteil (1) durch Schweißen übereinander liegender Flächen (insbesondere durch Reibschweißen zur Erzeugung einer Kunststoff-Kunststoff- oder Kunststoff-Werkstoff Verbindung), durch Verschweißen übereinander liegender Kanten, durch Punktschweißen, Kleben, Börteln, Clinchen, Nieten, Kunststoff-Nieten, Zapfenschweißen von Kunststoffzapfen oder einer beliebigen Kombination dieser Verfahren verbunden ist.

9. Leichtbauteil nach einem der Ansprüche 1 bis 8, **dadurch gekennzeichnet, daß** die Stützstruktur (2) mit der Wand des Gehäuseteiles (1) mittels spritzgegossenen formschlüssigen Verbindungen (7, 8, 5) im Bereich von Durchbrüchen und/oder Sicken in der Wand verbunden ist.

10. Leichtbauteil nach einem der Ansprüche 1 bis 9, **dadurch gekennzeichnet, daß** die Stützstruktur (2) mit dem Gehäuseteil (1) mittels Steckverbindungen oder Schnappverbindungen (6) formschlüssig verbunden ist.

11. Leichtbauteil nach einem der Ansprüche 1 bis 10, **dadurch gekennzeichnet, daß** die Stützstruktur (2) mit dem Gehäuseteil (1) durch Kleb- und/oder Schweißverbindungen stoffschlüssig verbunden ist.

12. Leichtbauteil nach einem der Ansprüche 1 bis 11, **dadurch gekennzeichnet, daß** das Gehäuseteil (1) und/oder die Deckplatte (4) oder Deckschale (20) aus Metallblech, bevorzugt aus Stahl- oder Aluminium-Blech, oder aus Druckgußteilen, bevorzugt aus Aluminium, Zink oder Magnesium oder aus faserverstärktem Kunststoff bzw. Composites besteht.

13. Leichtbauteil nach einem der Ansprüche 1 bis 12, **dadurch gekennzeichnet, daß** der Kunststoff der Stützstruktur (2) ein, insbesondere verstärkter und/oder gefüllter Thermoplast, bevorzugt ein Polycarbonat (PC), Polyester, Polyurethan, Polystyrol, ABS, Polyamid (PA), Polybutylenterephthalat (PBT), oder Polypropylen (PP) ist.

14. Leichtbauteil nach einem der Ansprüche 1 bis 13, **dadurch gekennzeichnet, daß** das Leichtbauteil teilweise Öffnungen zu dem aus Gehäuseteil (1) und Deckplatte (4) oder Deckschale (20) gebildeten Raum aufweist.

15. Leichtbauteil nach einem der Ansprüche 1 oder 5 bis 8, **dadurch gekennzeichnet, daß** die Stützstruktur (2, 32) lediglich in das Gehäuseteil (1) eingelegt ist.

16. Verwendung eines Leichtbauteils nach einem der Ansprüche 1 bis 15 als Längsträger, Querträger, Bodengruppenbauteil, Querlenker, energieabsorbie rende Seiten- oder Stirnwand oder als Stoßfängerträger im Fahrzeugbau oder Flugzeugbau.

17. Verwendung eines Leichtbauteils nach einem der Ansprüche 1 bis 15 als Knotenelement zur Verbindung von Trägern, insbesondere im Fahrzeugbau.

18. Verfahren zur Herstellung von Leichtbauteilen als Kunststoff-Werkstoff-Verbund in Hybridbauweise bestehend mindestens aus wenigstens einem schalenförmigen Gehäuseteil (1) und einer gerippten Stützstruktur (2) wobei, wenigstens ein Gehäuseteil (1) aus Metall auf seiner Innenseite mit einer Stützstruktur (2) aus Kunststoff versehen wird **dadurch gekennzeichnet, daß** wenigstens ein Gehäuseteil (1) mit einer Deckplatte (4) oder Deckschale (20) aus Metall oder Kunststoff-Composites verbunden wird.

19. Verfahren nach Anspruch 18, **dadurch gekennzeichnet, daß** in einem ersten Schritt die Stützstruktur (2) auf das Gehäuseteil (1) durch Spritzgießen aufgebracht wird, indem die Rippen (9, 13, 29) der Stützstruktur (2) über Formschlüsse (7, 8), die Bestandteil der Stützstruktur (2) sind, mit der Wand des Gehäuseteiles (1) verbunden werden und in einem zweiten Schritt mit einem Deckblech (4) oder Deckschale (20) verschlossen wird.

20. Verfahren nach einem der Ansprüche 18 bis 19, **dadurch gekennzeichnet, daß** die Deckplatte (4) oder die Deckschale (20) vor dem Verschließen des Gehäuseteiles (1) mit einer eigenen Stützstruktur aus Kunststoff versehen und/oder teilweise oder vollständig mit Kunststoff überspritzt bzw. ummantelt wird.

21. Verfahren nach einem der Ansprüche 18 bis 20, **dadurch gekennzeichnet, daß** die Deckplatte (4) oder Deckschale (20) mit dem Gehäuseteil (1) an unmittelbar aufeinander liegenden Stellen, insbesondere im Bereich von Durch brüchen (3) mittels thermoplastischem Kunststoff formschlüssig miteinander verbunden werden.

22. Verfahren nach einem der Ansprüche 18 bis 21, **dadurch gekennzeichnet, daß** die Deckschale (20) bzw. die Deckplatte (4) mit der Stützstruktur (2) und/oder dem Gehäuseteil (1) verschweißt bzw. mittels Kunststoffnieten verbunden werden, wobei auf Rippen (9, 13, 29) der Stützstruktur (2) vorgesehene Kunststoffzapfen (7, 8) formschlüssig in Hinterschnitte des Gehäuseteiles (1) bzw. der Deckschale (20) oder der Deckplatte (4) eingreifen.

23. Verfahren nach einem der Ansprüche 18 bis 22, **dadurch gekennzeichnet, daß** die Deckschale (20) bzw. die Deckplatte (4) mit der Stützstruktur (2) und/oder dem Gehäuseteil (1) durch Schweißen übereinander liegender Flächen (insbesondere durch Reibschweißen zur Erzeugung einer Kunststoff-Kunststoff- oder Kunststoff-Werkstoff Verbindung), durch Verschweißen übereinander liegender Kanten, durch Punktschweißen, Kleben, Börteln, Clinchen, Nieten, Kunststoff-Nieten, Zapfenschweißen von Kunststoffzapfen oder einer beliebigen Kombination dieser Verfahren verbunden wird.

24. Verfahren nach einem der Ansprüche 18 bis 23, **dadurch gekennzeichnet, daß** die Stützstruktur (2) vor dem Verschliessen des Gehäuseteiles (1) durch Stecken oder Schnappen mit dem Gehäuseteil (1) formschlüssig verankert wird.

25. Verfahren nach einem der Ansprüche 18 bis 24, **dadurch gekennzeichnet, daß** die Stützstruktur (2) vor dem Verschliessen des Gehäuseteiles (1) durch Kleben und/oder Schweißen stoffschlüssig mit dem Gehäuseteil (1) verbunden wird.

## Claims

1. Hollow-chamber lightweight component at least comprising at least one shell-shaped housing part (1) made of metal and a ribbed supporting structure (2) made of plastic, in particular made of thermoplastic material, wherein the supporting structure (2) is up against the inside of the housing part (1) and, in particular, is joined to the housing part (1), **characterized by** at least one cover plate (4) or covering shell (20), made of metal or plastic composites, which largely covers the space formed from the housing part (1) and the supporting structure (2) and is joined in its peripheral region at least with one part of the boundary (10) of the housing part (1).

2. Lightweight component according to claim 1, **characterized in that** the supporting structure (2) is joined to the housing part (1) in a positive-locking manner, in particular by means of injection moulding.

3. Lightweight component according to claim 1 or 2, **characterized in that** the supporting structure (2) is joined to the housing part (1) in a positive-locking manner by studs which are moulded onto the supporting structure (2) and are reshaped to form plastic rivets.

4. Lightweight component according to one of claims 1 to 3, **characterized in that** the cover plate (4) or the covering shell (20) is likewise provided with a supporting structure (32) made of plastic.

5. Lightweight component according to one of claims 1 to 4, **characterized in that** the cover plate (4) or covering shell (20) has a partial or complete sheathing or overmoulding (19, 24) with thermoplastic material on its outside (11), in particular in the region of its joint to the housing part (1).

6. Lightweight component according to one of claims 1 to 5, **characterized in that** the cover plate (4) or covering shell (20) is mutually joined to the housing part (1) in a positive-locking manner at points situated directly on top of one another, in particular in the region of perforations (3) situated above one another, by means of thermoplastic material.

7. Lightweight component according to one of claims 1 to 6, **characterized in that** the covering shell (20) or the cover plate (4) is joined to the supporting structure (2) and/or the housing part (1) by'welding or by means of plastic rivets, plastic studs (8) provided on ribs (9) of the supporting structure (2) engaging in a positive-locking manner in re-entrants of the housing part (1) or of the covering shell (20) or of the cover plate (4).

8. Lightweight component according to one of claims 1 to 7, **characterized in that** the covering shell (20) or the cover plate (4) is joined to the supporting structure (2) and/or the housing part (1) by welding surfaces situated above one another (in particular, by friction welding to produce a plastic/plastic or plastic/material joint), by welding edges situated above one another, by spot welding, bonding, flanging, clinching, riveting, plastic riveting, stud welding of plastic studs or any desired combination of these methods.

9. Lightweight component according to one of claims 1 to 8, **characterized in that** the supporting structure (2) is joined to the wall of the housing part (1) by means of injection-moulded positive-locking joints (7, 8, 5) in the region of perforations and/or corrugations in the wall.

10. Lightweight component according to one of claims 1 to 9, **characterized in that** the supporting structure (2) is joined to the housing part (1) in a positive-locking manner by means of plug joints or snap joints (6).

11. Lightweight component according to one of claims 1 to 10, **characterized in that** the supporting structure (2) is joined to the housing part (1) in a material-locked manner by bonded and/or welded joints.

12. Lightweight component according to one of claims 1 to 11, **characterized in that** the housing part (1) and/or the cover plate (4) or covering shell (20) comprises metal sheet, preferably steel or aluminium sheet, or die-cast parts; preferably made of aluminium, zinc or magnesium or of fibre-reinforced plastic or composites.

13. Lightweight component according to one of claims 1 to 12, **characterized in that** the plastic of the supporting structure (2) is, in particular, a reinforced and/or filled thermoplastic material, preferably a polycarbonate (PC), polyester, polyurethane, polystyrene, ABS, polyamide (PA), polybutylene terephthalate (PBT) or polypropylene (PP).

14. Lightweight component according to one of claims 1 to 13, **characterized in that** the lightweight component partially has openings to the space formed from housing part (1) and cover plate (4) or covering shell (20).

15. Lightweight component according to one of claims 1 or 5 to 8, **characterized in that** the supporting structure (2, 32) is only laid in the housing part (1).

16. Use of a lightweight component according to one of claims 1 to 15 as longitudinal girder, cross girder, underbody component, suspension arm, energy-absorbing side or front wall, or as bumper bar in vehicle construction or aircraft construction.

17. Use of a lightweight component according to one of claims 1 to 15 as junction element for joining girders, in particular in vehicle construction.

18. Method for producing lightweight components as a plastic/material composite in a hybrid structure, at least comprising at least one shell-shaped-housing part (1) and a ribbed supporting structure (2), wherein at least one housing part (1) made of metal is provided on its inside with a supporting structure (2) made of plastic, **characterized in that** the at least one housing part (1) is joined to a cover plate (4) or covering shell (20) made of metal or plastic composites.

19. Method according to claim 18, **characterized in that**, in a first step, the supporting structure (2) is applied to the housing part (1) by injection moulding by joining the ribs (9, 13, 29) of the supporting structure (2) via positive locks (7, 8) which are a component of the supporting structure (2) to the wall of the housing part (1) and closing in a second step with a cover sheet (4) or covering shell (20).

20. Method according to one of claims 18 to 19, **characterized in that** the cover plate (4) or the covering shell (20) is provided prior to closing the housing part (1) with its own supporting structure made of plastic and/or is partly or completely overmoulded or sheathed with plastic.

21. Method according to one of claims 18 to 20, **characterized in that** the cover plate (4) or covering shell (20) is mutually joined to the housing part (1) in a positive-locking manner at points situated directly on top of one another, in particular in the region of perforations (3), by means of thermoplastic material.

22. Method according to one of claims 18 to 21, **characterized in that** the covering shell (20) or the cover plate (4) is joined to the supporting structure (2) and/or the housing part (1) by welding or by means of plastic-riveting, plastic studs (7, 8) provided on ribs (9, 13, 29) of the supporting structure (2) engaging in a positive-locking manner in re-entrants of the housing part (1) or of the covering shell (20) or of the cover plate (4).

23. Method according to one of claims 18 to 22, **characterized in that** the covering shell (20) or the cover plate (4) is joined to the supporting structure (2) and/or the housing part (1) by welding surfaces situated above one another (in particular, by friction welding to produce a plastic/plastic or plastic/material joint), by welding edges situated above one another, by spot welding, bonding, flanging, clinching, riveting, plastic riveting, stud welding of plastic studs or any desired combination of these methods.

24. Method according to one of claims 18 to 23, **characterized in that** the supporting structure (2) is anchored to the housing part (1) in a positive-locking manner by plugging or snapping prior to closing the housing part (1).

25. Method according to one of claims 18 to 24, **characterized in that** the supporting structure (2) is joined to the housing part (1) in a material-locked manner by bonding and/or welding prior to closing the housing part (1).

## Revendications

1. Composant léger à chambre creuse constitué par au moins une partie de boîtier (1) en forme de coquille en métal et par une structure de soutien nervurée (2) en matière plastique, en particulier en matière thermoplastique, la structure de soutien (2) prenant appui sur le côté intérieur de la partie de boîtier (1) et étant reliée en particulier à la partie de boîtier (1), **caractérisé par** au moins une plaque de couverture (4) ou par une coquille de couverture (20) en métal ou en composites de matière plastique qui recouvre largement la chambre formée par la partie de boîtier (1) et par la structure de soutien (2) et qui est reliée dans sa zone de bord à une partie au moins de la bordure (10) de la partie de boîtier (1).

2. Composant léger selon la revendication 1, **caractérisé en ce que** la structure de soutien (2) est reliée à la partie de boîtier (1) par coopération de formes, en particulier par moulage par injection.

3. Composant léger selon l'une ou l'autre des revendications 1 et 2, **caractérisé en ce que** la structure de soutien (2) est reliée par coopération de formes à la partie de boîtier (1) par des tourillons qui sont conformés sur la structure de soutien (2) et qui sont façonnés pour réaliser des rivets en matière plastique.

4. Composant léger selon l'une des revendications 1 à 3, **caractérisé en ce que** la plaque de couverture (4) ou la coquille de couverture (20) est également pourvue d'une structure de soutien (32) en matière plastique.

5. Composant léger selon l'une des revendications 1 à 4, **caractérisé en ce que** la plaque de couverture (4) ou la coquille de couverture (20) présente sur son côté extérieur (11), en particulier dans la zone de sa liaison avec la partie de boîtier (1), un entourage ou surmoulage partiel ou complet (19, 24) de matière thermoplastique.

6. Composant léger selon l'une des revendications 1 à 5, **caractérisé en ce que** la plaque de couverture (4) ou la coquille de couverture (20) est reliée en coopération de formes au moyen d'une matière thermoplastique à la partie de boîtier (1) à des emplacements situés directement l'un sur l'autre, en particulier dans la zone de traversées superposées (3).

7. Composant léger selon l'une des revendications 1 à 6, **caractérisé en ce que** la coquille de couverture (20) ou la plaque de couverture (4) est soudée ou reliée par des rivets en matière plastique à la structure de soutien (2) et/ou à la partie de boîtier (1), des tourillons (8) en matière plastique prévus sur des nervures (9) de la structure de soutien (2) venant s'engager par coopération de formes dans des contre-dépouilles de la partie de boîtier (1) ou de la coquille de couverture (20) ou de la plaque de couverture (4).

8. Composant léger selon l'une des revendications 1 à 7, **caractérisé en ce que** la coquille de couverture (20) ou la plaque de couverture (4) est reliée à la structure de soutien (2) et/ou à la partie de boîtier (1) par soudage de surfaces superposées (en particulier par soudage par friction pour établir une liaison matière plastique/matière plastique ou matière plastique/matériau), par soudage d'arêtes superposées, par soudage par points, par collage, par sertissage, par moulurage, par rivetage, par des rivets en matière plastique, par soudage de plots en matière plastique ou par une combinaison quelconque de ces procédés.

9. Composant léger selon l'une des revendications 1 à 8, **caractérisé en ce que** la structure de soutien (2) est reliée à la paroi de la partie de boîtier (1) au moyen de liaisons moulées par injection en coopération de formes (7, 8, 5) dans la zone de traversées et/ou de moulures dans la paroi.

10. Composant léger selon l'une des revendications 1 à 9, **caractérisé en ce que** la structure de soutien (2) est reliée par coopération de formes à la partie de boîtier (1) au moyen de liaisons à enfichage ou de liaisons à encliquetage (6).

11. Composant léger selon l'une des revendications 1 à 10, **caractérisé en ce que** la structure de soutien (2) est reliée par coopération de matières à la partie de boîtier (1) par des liaisons collées et/ou soudées.

12. Composant léger selon l'une des revendications 1 à 11, **caractérisé en ce que** la partie de boîtier (1) et/ou la plaque de couverture (4) ou la coquille de couverture (20) est constituée de tôle métallique, de préférence de tôle d'acier ou d'aluminium, ou par des pièces moulées sous pression, de préférence en aluminium, en zinc ou en magnésium ou en matière plastique renforcée de fibres ou en composites.

13. Composant léger selon l'une des revendications 1 à 12, **caractérisé en ce que** la matière plastique de la structure de soutien (2) est une matière thermoplastique en particulier renforcée et/ou chargée, de préférence un polycarbonate (PC), polyester, polyuréthanne, polystyrène, ABS, polyamide (PA), polybutylène téréphtalate (PBT) ou de polypropylène (PP).

14. Composant léger selon l'une des revendications 1 à 13, **caractérisé en ce que** le composant léger présente en partie des ouvertures vers la chambre formée par la partie de boîtier (1) et par la plaque de couverture (4) ou par la coquille de couverture (20).

15. Composant léger selon l'une des revendications 1 ou 5 à 8, **caractérisé en ce que** la structure de soutien (2, 32) est uniquement posée dans la partie de boîtier (1).

16. Utilisation d'un composant léger selon l'une des revendications 1 à 15 à titre de longeron, de traverse, de composant de groupe de plancher, de bras transversal, de paroi latérale ou frontale absorbant de l'énergie ou de support de pare-chocs dans la construction automobile ou dans la construction aéronautique.

17. Utilisation d'un composant léger selon l'une des revendications 1 à 15 à titre d'élément formant noeud pour relier des supports, en particulier dans la construction automobile.

18. Procédé pour réaliser des composants légers sous forme de composite matière plastique/matériau de mode de construction hybride, constitué par au moins une partie de boîtier (1) en forme de coquille et par une structure de soutien nervurée (2), dans lequel on pourvoit au moins une partie de boîtier (1) en métal, sur son côté intérieur, d'une structure de soutien (2) en matière plastique, **caractérisé en ce que** l'on relie au moins une partie de boîtier (1) à une plaque de couverture (4) ou à une coquille de couverture (20) en métal ou en composites de matière plastique.

19. Procédé selon la revendication 18, **caractérisé en ce que** dans une première étape on monte la structure de soutien (2) par moulage par injection sur la partie de boîtier (1) en reliant les nervures (9, 13, 29) de la structure de soutien (2) à la paroi de la partie de boîtier (1) via des coopérations de formes (7, 8) faisant partie de la structure de soutien (2), et dans une deuxième étape on la referme par une tôle de couverture (4) ou par une coquille de couverture (20).

20. Procédé selon l'une des revendications 18 et 19, **caractérisé en ce qu'**avant de fermer la partie de boîtier (1), on munit la plaque de couverture (4) ou la coquille de couverture (20) d'une propre structure de soutien en matière plastique et/ou on la pourvoit partiellement ou complètement d'un surmoulage ou d'un enrobage en matière plastique.

21. Procédé selon l'une des revendications 18 à 20, **caractérisé en ce que** l'on relie par coopération de formes, au moyen de matière thermoplastique, la plaque de couverture (4) ou la coquille de couverture (20) à la partie de boîtier (1) l'une à l'autre à des emplacements situés directement l'un sur l'autre, en particulier dans la zone de traversées (3).

22. Procédé selon l'une des revendications 18 à 21, **caractérisé en ce que** l'on soude la coquille de couverture (20) ou la plaque de couverture (4) sur la structure de soutien (2) et/ou sur la partie de boîtier (1) ou on les relie au moyen de rivets en matière plastique, des tourillons (7, 8) en matière plastique prévus sur des nervures (9, 13, 29) de la structure de soutien (2) venant s'engager par coopération de formes dans des contre-dépouilles de la partie de boîtier (1) ou de la coquille de couverture (20) ou de la plaque de couverture (4).

23. Procédé selon l'une des revendications 18 à 22, **caractérisé en ce que** l'on relie la coquille de couverture (20) ou la plaque de couverture (4) à la structure de soutien (2) et/ou à la partie de boîtier (1) par soudage de surfaces superposées (en particulier par soudage par friction pour établir une liaison matière plastique/matière plastique ou matière plastique/matériau), par soudage d'arêtes superposées, par soudage par points, par collage, par sertissage, par moulurage, par rivetage, par des rivets en matière plastique, par soudage de plots en matière plastique ou par une combinaison quelconque de ces procédés.

24. Procédé selon l'une des revendications 18 à 23, **caractérisé en ce qu'**avant de fermer la partie de boîtier (1), on ancre la structure de soutien (2) par coopération de formes par enfichage ou par encliquetage dans la partie de boîtier (1).

25. Procédé selon l'une des revendications 18 à 24, **caractérisé en ce qu'**avant de fermer la partie de boîtier (1), on relie la structure de soutien (2) par collage et/ou par soudage en coopération de matières à la partie de boîtier (1).
